(19) **Europäisches Patentamt**

**European Patent Office**

**Office européen des brevets**

(11) Veröffentlichungsnummer: **0 221 330 B1**

(12) # EUROPÄISCHE PATENTSCHRIFT

(45) Veröffentlichungstag der Patentschrift:
02.01.91 Patentblatt 91/01

(21) Anmeldenummer: **86113254.6**

(22) Anmeldetag: **26.09.86**

(51) Int. Cl.⁵: **C08G 12/30**

(54) Schaumstoffe und Fasern aus Melaminharzen mit erhöhter Festigkeit.

(30) Priorität: **28.09.85 DE 3534740**

(43) Veröffentlichungstag der Anmeldung:
**13.05.87 Patentblatt 87/20**

(45) Bekanntmachung des Hinweises auf die
Patenterteilung:
**02.01.91 Patentblatt 91/01**

(84) Benannte Vertragsstaaten:
**BE CH DE FR GB IT LI NL**

(56) Entgegenhaltungen:
**EP-A- 0 017 672**
**EP-A- 0 166 297**
**DE-A- 1 103 582**
**FR-A- 2 217 440**
**US-A- 4 424 261**
**US-A- 4 591 613**

(72) Erfinder: **Turznik, Gerhard, Dr.**
**Budapester Strasse 45**
**D-6700 Ludwigshafen (DE)**
Erfinder: **Woerner, Frank Peter, Dr.**
**Am Altenbach 18**
**D-6706 Wachenheim (DE)**
Erfinder: **Weber, Heinz, Dr.**
**Am Wehrhaus 26**
**D-6718 Gruenstadt (DE)**
Erfinder: **Ebel, Klaus, Dr.**
**Ungsteiner Strasse 18**
**D-6700 Ludwigshafen (DE)**
Erfinder: **Kaeppel, Hanshelmut**
**Traminerstrasse 11**
**D-6940 Weinheim (DE)**
Erfinder: **Goepel, Juergen**
**Augartenstrasse 22**
**D-6800 Mannheim 1 (DE)**

(73) Patentinhaber: **BASF Aktiengesellschaft**
**Carl-Bosch-Strasse 38**
**D-6700 Ludwigshafen (DE)**

## Beschreibung

Die Erfindung betrifft Schaumstoffe und Fasern aus Melamin/Formaldehyd-Kondensationsharzen mit erhöhter Festigkeit, bei denen ein Teil des Melamins durch substituiertes Melamin ersetzt ist.

Schaumstoffe und Fasern aus Melaminharzen sind bekannt, z.B. aus DE-A-29 15 457 und DE-A-23 64 091. Der vorliegenden Erfindung lag die Aufgabe zugrunde, die mechanische Festigkeit derartiger Formkörper zu verbessern.

Es wurde gefunden, daß diese Aufgabe gelöst wird, wenn in den Melamin/Formaldehyd-Kondensationsharzen 1 bis 80 Gew.% des Melamins durch Hydroxyalkylmelamin ersetzt ist.

In DE-A-29 15 457 sind Schaumstoffe aus Melamin/Formaldehyd-Kondensationsharzen beschrieben, bei denen Melamin ganz oder teilweise durch alkylsubstituiertes Melamin ersetzt sein kann. Ein Ersatz durch Hydroxyalkylmelamin ist nicht offenbart. In der älteren deutschen Patentanmeldung DE-A-34 22 218 ist die Verwendung von N,N',N''-Tris(2-hydroxyethyl)melamin als Modifizierungsmittel bei der Herstellung von Aminoplastharzen, die zur Oberflächenbeschichtung geeignet sind, beschrieben. Beschichtungen sind keine Schaumsloffe oder Fasern im Sinne der vorliegenden Erfindung.

Bevorzugtes Hydroxyalkylmelamin ist Hydroxyethylmelamin, grundsätzlich sind jedoch auch höhere Alkylreste als Substiuenten geeignet. Bei dem Hydroxyalkylmelamin können ein, zwei oder drei Aminogruppen des Melamins durch 2-Hydroxyethylamingruppen ersetzt sein. Technisches Hydroxyethylmelamin ist ein Gemisch aus N-mono-, N,N'-bis- und N,N',N''-tris-(2-hydroxyethyl)melamin im Molverhältnis von etwa 1 :5 :4.

Die erfindungsgemäßen Schaumsloffe und Fasern werden durch Härtung und Formung aus Melaminharz-Vorkondensaten hergestellt. In diesen Vorkondensaten kann der Ersatz des Melamins durch das Hydroxyalkylmelamin auf zweierlei Weise erfolgen : Einmal kann man von einem Copolymeren ausgehen, bei dem substituiertes und unsubstituiertes Melamin mit Formaldehyd copolykondensiert sind ; zum anderen kann man eine Mischung eines Melaminharzes auf Basis von unsubstituiertem Melamin mit einem Melaminharz auf Basis von substituiertem Melamin verwenden. Bei letzterem beträgt das Molverhältnis Hydroxyalkylmelamin zu Formaldehyd vorzugsweise 0,2 :1 bis 4 :1, insbesondere 0,4 :1 bis 2 :1 ; es wird zweckmäßigerweise als Lösung in wäßrigem Formaldehyd eingesetzt.

Es hat sich gezeigt, daß bei der Herstellung von Fasern die Verwendung von Copolymeren günstiger ist, während bei Schaumstoffen auch die etwas billigeren Mischungen eingesetzt werden können. Bei Schaumstoffen genügt es schon, wenn 3 bis 30, vorzugsweise 5 bis 20 Gew.% des Melamins ersetzt sind, um die Festigkeit, insbesondere die Einreißfestigkeit des Schaumstoffs zu verbessern. Es hat sich überraschenderweise gezeigt, daß dabei auch die elektrostatische Aufladung der Schaumstoffe deutlich verringert wird.

Bei Fasern dagegen scheint es erforderlich zu sein, größere Mengen Melamin, nämlich 20 bis 60, vorzugsweise 30 bis 50 Gew.% durch Hydroxyethylmelamin zu ersetzen, um die Reißdehnung deutlich zu verbessern.

Die Herstellung der erfindungsgemäßen Schaumsloffe und Fasern aus den Vorkondensaten ist an sich bekannt, sie ist z.B. in der zitierten Druckschriften beschrieben.

Die in den Beispielen genannten Teile und Prozente beziehen sich auf das Gewicht.

### Beispiel 1

A. Herstellung des Melaminharzes

Aus einem Gemisch von N-mono-, N,N'-bis- und N,N',N''-tris-(2-hydroxyethyl)-melamin, 50%igem wäßrigen Formaldehyd und Wasser wird innerhalb von 30 min bei 85 bis 90°C ein klares, 80%iges Vorkondensat Hydroxyethylmelamin/Formaldehyd mit einem Molverhältnis von 1 :1 hergestellt, das mehrere Wochen lagerfähig ist.

25 g dieses Vorkondensats werden in einem offenen Gefäß mit 55 g Wasser und 220 g eines sprühgetrockneten, Sulfitgruppen enthaltenden Melamin/Formaldehyd-Harzes (Molverhältnis 1 :3) unter Rühren homogen gemischt. Die Viskosität der Harzmischung beträgt ca.7 Pa·s.

B. Herstellung des Schaumstoffs

In die Harzmischung wird ein Gemisch aus 5 g Wasser, 7 g des Natriumsalzes der $C_{15}$-Paraffinsulfonsäure (als 40%ige wäßrige Lösung) und 2 g des Natriumsalzes des sulfatierten, mit 25 Mol Ethylenoxid umgesetzten Isooctylphenols, 35%ig in Wasser (Emulgatoren), 7 g 75%iger Ameisensäure (Härter) und 45 g Pentan (Treibmittel) homogen eingearbeitet. Das so erhaltene schäumbare Gemisch wird in einem Wärmeschrank bei 160°C Lufttemperatur 8 min lang aufgeschäumt und weitere 12 min lang nachgehärtet. Anschließend wird der entstandene offenzellige Schaumstoff 25 min lang von 230°C heißer Luft durchströmt, um Wasser und Treibmittel weitgehend zu entfernen. Der fertige Schaumstoff weist eine Dichte von 11,6 [g/l] auf ; 9 % des Melamins sind durch Hydroxyethylmelamin ersetzt. Gegenüber einem Schaumstoff, der ohne modifiziertes Vorkondensat hergestellt wurde, ist die Einreißfestigkeit um etwa 90 % erhöht. Die Einreißfestigkeit wurde folgendermaßen gemessen : Probekörper der Abmessungen 25×25×10 cm wurden in Schäum-Richtung mit einem Stempel (∅25 mm, Kalottenradius 40 mm, Kantenradius 2 mm), der in einem Winkel vo 75° auf die Probenoberfläche auftrifft, bis zum Einreißen eingedrückt und die 3 Reißkraftwerte als Maß für die mechanische Qualität des Schaumstoffs ermittelt.

Beispiel 2

A. Herstellung des Melaminharzes

572 g Formaldehyd (40 % in Wasser), 623,5 g Melamin, 167 g Paraformaldehyd und 353 g Hydroxyethylmelamin (Gemisch aus N-Mono-, N,N′-Bis-und N,N′,N″-Trishydroxyethylmelamin, Molverhältnis 1:5:4) werden unter Rühren auf 95°C erhitzt. Sobald eine klare Lösung vorliegt, wird ein pH-Wert von 8 eingestellt. Das Reaktionsgemisch wird so lange auf Temperatur gehalten, bis eine Viskosität von 150 Pa·s (gemessen bei 25°C) erreicht ist. Dann wird zügig abgekühlt. Das Harz hat bei 25°C eine Endviskosität von 170 Pa·s.

B. Faserherstellung

Das oben beschriebene Harz wird mit 2% Ameisensäure (35%ig in Wasser) abgemischt und in einer Zentrifugal-Spinnapparatur zu Fasern verarbeitet, um das Abtrocknen zu beschleunigen, bläst man im Gegenstrom Luft zu. Die endgültige Festigkeit erreichen die Fasern erst nach einem Temperprozess. Hierzu heizt man diese in einem Wärmeschrank innerhalb von 90 Minuten auf 200°C auf und hält die Temperatur weitere 30 bis 60 Minuten.

Die Fasern besitzen je nach Düse einen Durchmesser von 8 bis 30 µm und eine Länge von 0,3 bis 3 m.

## Ansprüche

1. Schaumstoffe und Fasern auf Basis von Melamin/Formaldehyd-Kondensationsharzen, bei denen 1 bis 80 Gew.% des Melamins durch substituiertes Melamin ersetzt ist, dadurch gekennzeichnet, daß der Substituent eine Hydroxyalkylgruppe mit mindestens zwei Kohlenstoffatomen ist.

2. Schaumstoffe und Fasern nach Anspruch 1, dadurch gekennzeichnet, daß die Alkylgruppe Ethyl ist.

3. Schaumstoffe und Fasern nach Anspruch 1, dadurch gekennzeichnet, daß das Harz ein Copolymeres ist, welches substituierte und unsubstituierte Melamin-Einheiten enthält.

4. Schaumstoffe und Fasern nach Anspruch 1, dadurch gekennzeichnet, daß das Harz eine Mischung aus einem Melaminharz auf Basis von unsubstituiertem Melamin und einem Melaminharz auf Basis von substituiertem Melamin ist.

5. Schaumstoffe nach Anspruch 1, dadurch gekennzeichnet, daß 3 bis 30 Gew.% des Melamins durch Hydroxyethylmelamin ersetzt ist.

6. Fasern nach Anspruch 1, dadurch gekennzeichnet, daß 20 bis 60 Gew.% des Melamins durch Hydroxyethylmelamin ersetzt ist.

## Claims

1. A foam or fiber based on a melamine/formaldehyde condensation resin in which from 1 to 80 % by weight of the melamine has been replaced by substituted melamine, wherein the substituent is a hydroxyalkyl group having two or more carbon atoms.

2. A foam or fiber as claimed in claim 1, wherein the alkyl group is ethyl.

3. A foam or fiber as claimed in claim 1, wherein the resin is a copolymer containing substituted and unsubstituted melamine units.

4. A foam or fiber as claimed in claim 1, wherein the resin is a mixture of a melamine resin based on unsubstituted melamine and a melamine resin based on substituted melamine.

5. A foam as claimed in claim 1, wherein from 3 to 30% by weight of the melamine has been replaced by hydroxyethylmelamine.

6. A fiber as claimed in claim 1, wherein from 20 to 60% by weight of the melamine has been replaced by hydroxyethylmelamine.

## Revendications

1. Mousses ou matières plastiques cellulaires et fibres à base de résines de condensation de mélamine et de formaldéhyde, chez lesquelles de 1 à 80% en poids de la mélamine sont remplacés par de la mélamine substituée, caractérisées en ce que le substituant est un radical hydroxyalkyle qui comporte au moins deux atomes de carbone.

2. Mousses ou matières plastiques cellulaires et fibres suivant la revendication 1, caractérisées en ce que le radical alkyle est le groupe éthyle.

3. Mousses ou matières plastiques cellulaires et fibres suivant la revendication 1, caractérisées en ce que la résine est un copolymère qui contient des unités mélamine substituée et mélamine non substituée.

4. Mousses ou matières plastiques cellulaires et fibres suivant la revendication 1, caractérisées en ce que la résine est un mélange constitué d'une résine de mélamine à base de mélamine non substituée et d'une résine de mélamine à base de mélamine substituée.

5. Mousses ou matières plastiques cellulaires suivant la revendication 1, caractérisées en ce que de 3 à 30% en poids de la mélamine sont remplacés par de l'hydroxyéthylmélamine.

6. Fibres suivant la revendication 1, caractérisées en ce que de 20 à 60% en poids de la mélamine sont remplacés par de l'hydroxyéthylmélamine.